# EUROPEAN PATENT APPLICATION

(11) **EP 4 361 482 A1**
(43) Date of publication of application: **01.05.2024**
(21) Application number: 23207193.6
(22) Date of filing: 31.10.2023
(51) Int. Cl.: F16L 5/04, A62C 2/06, E04B 1/94, E04B 2/74

(54) **A CAVITY BARRIER**

(30) Priority: 31.10.2022 GB 202216156
(71) Applicant: ARC Building Solutions Ltd, Leeds LS27 7JZ (GB)
(72) Inventor: WEEKS, Neil, Leeds, LS27 7JZ (GB); DANZEY-SMITH, George, Leeds, LS27 7JZ (GB); BOOTE, Alexander, Leeds, LS27 7JZ (GB); SMITH, David, Leeds, LS27 7JZ (GB); MARSTON, Barry, Leeds, LS27 7JZ (GB)
(74) Representative: Keltie LLP

(57) **Abstract**

According to an aspect of the present invention there is provided a cavity barrier (1) for installation in a cavity (8), between first and second opposed walls (4, 6) of a building construction (2), so as to surround an opening (7) that extends through the first and second walls (4, 6) for a conduit (9) of the building construction (2). The cavity barrier (1) includes a unitary body portion comprising: a first surface (16) for location against the first wall (4) and an opposing second surface (18) for location against the second wall (6), a hole extending through a depth of the body portion, from the first surface (14) to the second surface (16), for receiving the conduit (9), an interior surface defined between the first and second opposed surfaces (14, 16) by the through-hole; an opposing exterior surface extending between the first and second opposed surfaces (14, 16); and a thickness extending around the through-hole, from the interior surface to the exterior surface, wherein a minimum thickness of the body portion is greater than or equal to 0.65 times the depth of the body portion.

## Description

### Field of the Invention

The present invention relates to a cavity barrier. In particular, but not exclusively, the invention relates to a cavity barrier for installation in a cavity, between first and second opposed walls of a building construction, around a conduit that extends through the first and second walls. Aspects of the invention relate to a cavity barrier, to a building construction, to a building and to a method of manufacturing a cavity barrier.

### Background to the Invention

A cavity barrier is typically inserted in a cavity between opposing walls of a building construction, such as the opposing leaves of a cavity wall, to inhibit the spread of fire between the walls and to act as a barrier to heat transfer.

Various building regulations require the use of fire-rated cavity barriers at every junction, party wall, or opening, where the fire-rating is attained by satisfying respective testing standards designed to ensure that the time taken to burn through the cavity barrier is greater than a minimum threshold defined by the standards.

However, building constructions also require various conduits, such as waste pipes, service pipes, and boiler flues, that extend transversely through corresponding openings formed in the walls. Such conduits may present a route for fire to pass between the conduit and the cavity.

To address this issue, housebuilders have attempted to insulate the cavity by bending a cavity barrier in the shape of a cuboid around the conduit or otherwise cutting a cuboid of mineral wool into multiple sections, which are joined together to construct a complete square enclosure around the conduit.

The former method typically results in a reduced or compromised mineral wool thickness, reducing the time taken to burn through the cavity barrier. The latter method takes a significant amount of time, will damage the protective layer encapsulating the cavity barrier (intended to waterproof the mineral wool), and thereby compromise the performance of the barrier. The construction process may also result in air gaps that form at the corners of the square enclosure. Consequently, the ability to inhibit the spread of fire and mitigate heat transfer is often compromised.

More recently, timber frame construction has also become popular, particularly in the United Kingdom. In part, this is due to environmental considerations, as well as reduced material costs, better thermal performance, and faster construction capabilities. However, the use of timber frame constructions further increases the fire risk and the need for effective insulation.

The present invention has been devised to mitigate or overcome at least some of the above-mentioned problems.

### Summary of the Invention

The invention resides in a cavity barrier for use in a building construction. The cavity barrier may be configured to provide a fire rating and/or an effective seal at a cavity between first and second opposed walls of the building construction, in particular, around a conduit that extends through the first and second opposed walls, thereby inhibiting the spread of fire between the conduit and the cavity.

According to a first aspect of the invention there is provided a cavity barrier for installation in a cavity, between first and second opposed walls of a building construction, so as to surround / encircle / be arranged about an opening that extends through the first and second walls for a conduit of the building construction. The barrier includes a unitary body portion. The body portion being unitary in the sense that it is formed from a single piece of materials without joints. The body portion comprises: a first surface for location against the first wall and an opposing second surface for location against the second wall, a hole extending through a depth of the body portion, from the first surface to the second surface, for receiving the conduit, an interior surface defined between the first and second opposed surfaces by the through-hole; an opposing exterior surface extending between the first and second opposed surfaces. In examples, the body portion includes a thickness extending (orthogonally or radially) from the interior surface to the exterior surface, around the through-hole.

In examples, a minimum thickness of the body portion is greater than or equal to 0.65 times the depth of the body portion. In this manner, the cavity barrier may be used to provide fire-integrity in accordance with established fire testing principles.

Optionally, at least a portion of the body portion is compressible so as to form a substantially air-tight seal around the opening and between the first and second opposed walls. For example, the body portion may be compressible by at least 5 mm between the first and second walls. Optionally, the body portion may be compressible by at least 15 mm and, optionally, by at least 25 mm.

In examples, the body portion is resilient. Hence, the body portion resists compression and returns to its original shape once unloaded. This improves the durability of the cavity barrier.

In examples, the depth of the body portion is less than or equal to 300 mm and, optionally, less than or equal to 150 mm. In examples, the depth of the body portion is greater than 50 mm.

In examples, the minimum thickness of the body portion is greater than or equal to the depth of the body portion. In this manner, the cavity barrier may be particularly suitable for insertion between a masonry wall and a timber wall. In an example, the minimum thickness of the body portion is greater than or equal to 1.5 times the depth of the body portion. In this manner, the cavity barrier may be particularly suitable for insertion between a pair of timber walls.

In examples, the minimum thickness of the body portion may be less than or equal to 3 times the depth of the body portion. Beyond this thickness additional insulation is substantially redundant even between timber walls. Optionally, the minimum thickness of the body portion may be less than or equal to 2 times the depth of the body portion. For example, a thickness that is greater than 2 times the depth of the body portion may be substantially redundant when the cavity barrier is arranged between a masonry wall and a timber wall. In an example, the minimum thickness of the body portion may be less than or equal to the depth of the body portion. For example, a thickness that is greater than the depth of the body portion may be substantially redundant when the cavity barrier is arranged between a pair of masonry walls.

In examples, the span of the through hole may be at least 50 mm, preferably at least 100 mm. Typical building service conduits have a span of at least 50 mm. Optionally, the span of the through hole is less than or equal to 500 mm, preferably less than or equal to 300 mm, more preferably less than or equal to 150 mm. Building service conduits do not typically have a span that exceeds 500 mm.

In examples, the body portion may comprise fire-rated material. For example, the body portion may comprise a mineral wool, such as a rock fibre mineral wool or a glass fibre mineral wool.

Optionally, the mineral wool has a density of at least 15 kg/m³. Optionally, the mineral wool has a density of less than or equal to 150 kg/m³. Optionally, the mineral wool may have a density of approximately 33 kg/m³.

In examples, the body portion has a thermal conductivity of less than or equal to 0.04 W/mK, optionally, less than or equal to 0.037 W/mK, less than or equal to 0.035 W/mK, or less than or equal to 0.03 W/mK. For example, the body portion may have a thermal conductivity of 0.037 W/mK.

Optionally, the body portion is encapsulated in a protective layer. The protective layer may help to prevent ingress of water and other contaminants, particularly during storage or handling of the cavity barrier.

The protective layer may be water-resistant or waterproof, for example. Optionally, the protective layer may comprise plastics, such as polythene. In an example, the protective layer comprises a sealable bag portion for receiving the body portion. For example, the body portion may be encapsulated by being sealed inside the sealable bag portion.

In examples, the protective layer may further comprise one or more flange portions extending from the sealable bag portion for attachment to one of the first and second walls to support the cavity barrier in position on that wall. In this manner, the protective layer may serve the further advantage of removing construction steps associated with the prior art and allow the cavity barrier to be arranged in position during construction, for example when only one of the first and second walls has been constructed / installed and/or before the conduit is fitted.

The protective layer may, for example, be transparent or translucent. In this manner, the through-hole of the body portion can be aligned with the opening through the first and second walls, without having to compromise the protective layer. In other examples, the protective layer may be opaque and include a visual indicator of the position of the through-hole.

According to another aspect of the invention there is provided a building construction comprising: a first wall and an opposing second wall spaced apart to define a cavity between the first and second walls; an opening that extends through the first and second walls for a conduit of the building construction; and a cavity barrier, as described in a previous aspect of the invention, installed in the cavity.

Optionally, each of the first and second walls may be a masonry wall. In an example, the first wall may be a timber wall and the second wall may be a masonry wall, in which case, the minimum thickness of the body portion may be greater than or equal to 0.95 times the depth of the body portion. In an example, each of the first and second walls is a timber wall and, in this case, the minimum thickness of the body portion may be greater than or equal to 1.5 times the depth of the body portion, optionally, greater than or equal to 2 times the depth of the body portion.

According to another aspect of the invention there is provided a building comprising: a building construction as described in a previous aspect of the invention; and a conduit extending through the opening of the first and second walls; wherein the cavity barrier is installed in the cavity between the first and second walls so as to surround or encircle the conduit.

According to yet another aspect of the invention there is provided a method of manufacturing a cavity barrier as described in a previous aspect of the invention. The method comprises: punching the through-hole using a punch apparatus. In this manner, the body portion of the cavity barrier can be manufactured cheaply and efficiently and there is no need to replace expensive drill bits.

Optionally, the punch apparatus includes a die and a corresponding punch tool. The die comprises a hollow structure having: a first opening for receiving a block of material; a hollow interior for locating the block of material inside the hollow structure; and a second opening for guiding the punch tool into the block of material. Punching the through-hole may therefore comprise: inserting a block of insulation material into the die; and inserting the punch tool into the second opening to punch the through-hole in the block of insulation material.

Embodiments of the cavity barrier of the present invention can therefore be manufactured to suit any building design.

It will be appreciated that preferred and/or optional features of any aspect of the invention may be incorporated alone or in appropriate combination in any other aspect of the invention also.

### Brief Description of the Drawings

In order that the invention may be more readily understood, preferred non-limiting embodiments thereof will now be described, by way of example only, with reference to the accompanying drawings, in which like features are assigned like reference numerals, and in which:
Figure 1 is a schematic perspective view of a cavity barrier, according to an embodiment of the present invention, arranged in situ in a cavity wall;
Figure 2 is a schematic perspective view of the cavity barrier shown in Figure 1;
Figure 3 is a schematic perspective view of a body portion of the cavity barrier shown in Figure 2;
Figure 4 is a schematic front view of the body portion shown in Figure 3;
Figure 5 is a schematic front view of a protective layer of the cavity barrier shown in Figure 2;
Figure 6 is a schematic top view of the protective layer shown in Figure 5; and
Figure 7 schematically illustrates a punching apparatus for use in a method of manufacturing the cavity barrier of Figure 2;
Figure 8 schematically illustrates a method of manufacturing the cavity barrier of Figure 2, in accordance with an embodiment of the invention; and
Figures 9 to 12 schematically illustrate successive steps of the method shown in Figure 8.

### Detailed Description of Embodiments of the Invention

In general terms, embodiments of the invention provide cavity barriers that can be installed in a cavity, between first and second opposed walls of a building construction, around a conduit that extends (transversely) through the first and second walls. In this manner the cavity barriers inhibit heat transfer, and the spread of fire, between the conduit and the surrounding cavity, thereby providing fire protection and improving thermal performance.

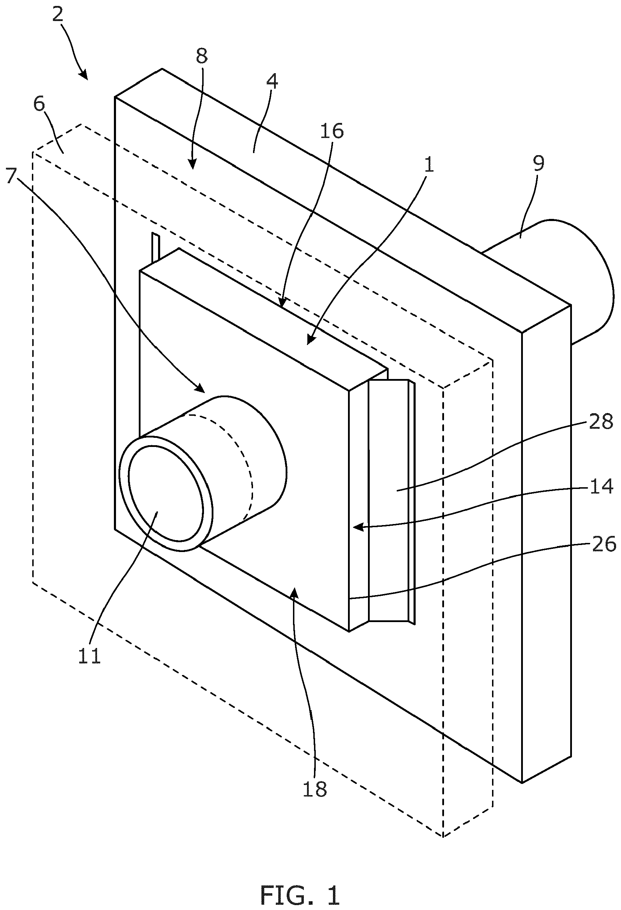

Figure 1 shows in schematic perspective view a cavity barrier 1, according to an embodiment of the present invention, arranged in situ in a building construction 2.

As shown, the building construction 2 includes a first wall 4, and an opposing second wall 6, as may be expected in a cavity wall for example. The cavity barrier 1 is disposed in a cavity 8, between the first and second walls 4, 6, around a conduit 9 that extends (transversely in this example) through the first and second walls 4, 6.

In example applications of the invention, the first and second walls 4, 6, may take various suitable forms, including respective leaves of a cavity wall as illustrated in the present example. Accordingly, it may be expected that one or both of the walls 4, 6 may be a masonry wall or a timber wall, or a combination may be expected, where one wall is a masonry wall and the other wall is formed of timber. The timber walls may be of any suitable construction, but typically comprise an outer frame of timber beams that is encased by opposed planar boards. A void defined between the boards, and within the timber frame, may be packed with insulating material to optimise the thermal performance of the timber wall. However, these examples are not intended to be limiting on the scope of the invention.

The cavity 8 of the building construction 2 is a space that exists between the first and second walls 4, 6, which may be tied together. Accordingly, in the absence of suitable insulation, there is a risk of significant heat transfer and fires spreading along the cavity 8 and between the walls 4, 6. To mitigate this risk, building regulations typically require the fitting of insultation pieces or cavity barriers inside the cavity 8.

The present invention has been conceived to provide such insulation where a conduit 9 extends through respective openings in each wall 4, 6. By way of example, one such opening 7 is depicted in the second wall 6 in Figure 1, however the respective opening in the first wall 4 is not visible.

The conduit 9 may provide one or more building services and may take the form of a waste pipe, a service pipe, and/or a boiler flue, amongst other examples. Accordingly, in each case, the conduit 9 defines an internal channel or passage 11 along which fires can spread and heat may be transferred with the surroundings. To provide some context, the size, span, or external diameter, of the conduit 9 may typically be at least 50 mm, in some examples, at least 75 mm, or even greater than or equal to 100 mm (within the context of this invention). However, the size, span, or external diameter, of the conduit 9 may generally be less than or equal to 300 mm, typically less than or equal to 150 mm.

It is therefore an aim of the present invention to provide adequate insulation around the conduit 9 to mitigate the spread of fire and/or the transfer of heat between the internal passage 11 of the conduit 9 and the cavity 8. For this purpose, the cavity barrier 1 is installed in the cavity 8 and around the conduit 9 in the manner shown in Figure 1.

In situ, the cavity barrier 1 is arranged in an abutting relationship with the first and second walls 4, 6 of the building construction 2, and may be held in compression, in situ, so as to form an air-tight seal and retain its position within the cavity 8, as shall be discussed in more detail.

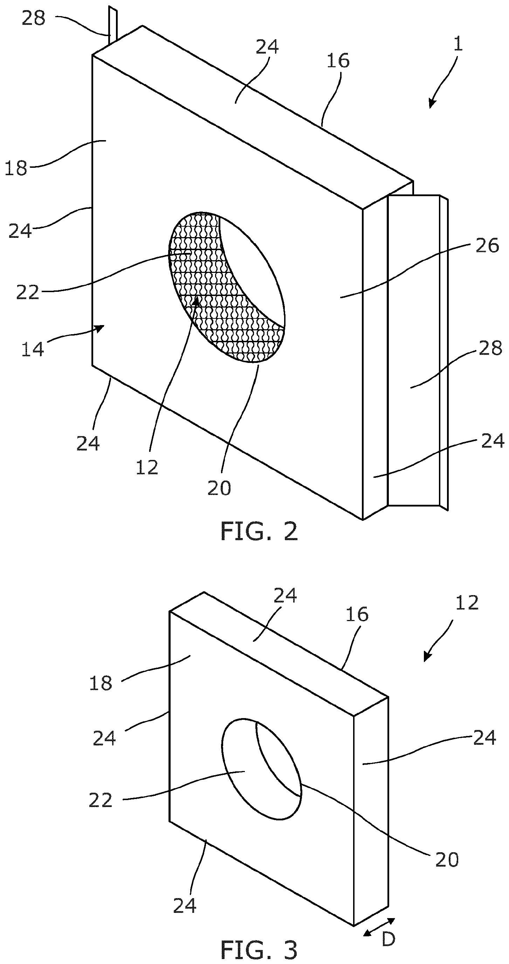

The example cavity barrier 1 shall now be considered in more detail with additional reference to Figures 2 to 6.

Figure 2 shows a schematic perspective view of the cavity barrier 1, which is defined by a unitary body portion 12, or core, that is encapsulated in a protective layer 14 in this example.

The body portion 12 comprises compressible, fire-rated, material, such as rock fibre mineral wool. Mineral wool is selected for its thermal insulation and fire-retardant properties, which enables the cavity barrier 1 to achieve a fire rating when installed around the conduit 9 in the cavity 8. Additionally, mineral wool is resilient and thus ideal for absorbing irregularities in the walls 4, 6 to provide effective sealing at the interface. In examples, the body portion 12 may therefore comprise a mineral wool that achieves a fire classification of Euro class A1 as defined in BS EN 13501-1, conforming to BS EN 13162 and EN16001 Energy Management Systems. For this purpose, the material of the body portion 12 should have a thermal conductivity of 0.04 W/mk or less, preferably less than or equal to 0.037 W/mK, more preferably less than 0.035 W/mK and the thermal conductivity may even be less than 0.03 W/mK. It is expected that the density of the mineral wool may be between 15 kg/m³ and, in exceptional circumstances, 150 kg/m³.

For the purposes of the present example, the body portion 12 is formed of rock-fibre mineral wool having a thermal conductivity of 0.037 W/mK. Moreover, the density of the mineral wool is approximately 33 kg/m³ in this example, which is typical of such cavity barriers.

The body portion 12 of the cavity barrier is shown in more detail in Figure 3, which shows a perspective view of the body portion 12, absent the protective layer 14.

The body portion 12 is shown to be a unitary component formed by a single continuous piece of material without joints or divisions. Importantly, there are therefore no defects or air gaps in the construction that would otherwise compromise the ability of the cavity barrier 1 to provide adequate fire-resistance and insulation.

In this example, the body portion 12 has a cuboidal shape with first and second opposing rectangular faces 16, 18 and a depth, D, extending from the first surface 16 to the second surface 18. However, the cuboidal shape of the body portion 12 is not intended to be limiting on the scope of the invention and, in other examples, the body portion 12 may take any suitable shape, such as circular, rectangular, hexagonal or triangular, subject to the further requirements defined herein.

In the example shown in Figure 3, the first and second surfaces 16, 18 of the body portion 12 are substantially parallel and planar for arrangement against respective walls 4, 6 of the building construction 2. In other examples, it is anticipated that the first surface 16 may be inclined relative to the second surface 18 though, so as to form an abutting relationship with the first and second walls 4, 6, in situ.

As shall become clear in the description that follows, the depth, D, of the body portion 12 is typically oversized for the cavity 8, for example to achieve a compression-fit between the first and second walls 4, 6, of the building construction 2 in situ.

For context, it is expected that the cavity barrier 1 may be installed in building constructions where the span of the cavity 8 generally does not exceed 300 mm, and typically does not exceed 150 mm. In particular, it is expected that the cavity barrier 1 may be used in a cavity between pairs of timber walls, pairs of brickwork or masonry walls, or between combinations of masonry walls and timber walls, where the span of the cavity is less than or equal to 300 mm, preferably less than or equal to 150 mm. However, if the cavity barrier 1 is installed between pair of timber walls, the maximum span of the cavity 8 may be reduced to less than or equal to 100 mm, for example.

For a particular body portion material, the degree of compression required, in situ, will depend on the material of the opposed walls 4, 6, between which the cavity barrier 1 is installed. For example, for a mineral wool density of approximately 33 kg/m³, at least 5 mm of compression is suitable when fitting the cavity barrier 1 between a pair of brickwork or masonry walls, while at least 15 mm of compression is suitable when fitting the cavity barrier 1 between brickwork/masonry and timber, and at least 25 mm of compression is appropriate when fitting the cavity barrier 1 between a pair of timber walls.

As the density of the mineral wool increases, the required amount of compression reduces and vice versa. However, the depth, D, of the body portion 12 may typically be between 5 mm and 15 mm greater than the span of the cavity 8, though may be 25 mm or more greater than the span of the cavity 8 in certain applications. The required compression for a particular material / density can be confirmed in accordance with the fire resistance tests prescribed for service installations in the building regulation standards, such as BS 476 and/or BS EN 1366.

In general, as the cavity barrier 1 is typically used between masonry wall cavities having a span of up to 150 mm or timber wall cavities having a span of up to 100 mm it may therefore be expected that the body portion 12 may be compressible between the first and second opposed walls 4, 6 by at least 2 percent, preferably at least 10 percent, and may even be at least 25 percent. This construction provides a cavity barrier that is sufficiently rigid to be stored and handled with ease, whilst also having some flexibility and resilience to facilitate installation into tight spaces, and self-retention thereafter.

As shown in Figure 2, a hole 20 extends through the depth, D, of the body portion 12 from the first surface 16 to the second surface 18, defining a through-hole for receiving the conduit 9. The hole 20 defines an interior surface 22 of the body portion 12, and opposing exterior surfaces 24 extend between the first and second surfaces 14, 16 of the body portion 12.

The hole 20 is sized so as to completely surround or encircle the openings 7 of the first and second walls 4, 6 and the conduit 9 that extends therethrough. The size of the hole 20, i.e. the diameter of the hole 20, therefore corresponds to the size of the openings 7 in the first and second walls 4, 6 for the conduit 9 and may be greater than or equal to the size of the openings 7. In particular, the hole 20 is sized so that, in situ, the cavity barrier 1 may be inserted in the cavity 8, between the first and second opposed walls 4, 6, and the cavity barrier 1 completely surrounds or encircles the openings 7 of the first and second walls 4, 6 and the conduit 9 extending therethrough, without any circumferential gaps or openings. Importantly, the hole 20 should be sized so that the first and second surfaces 16, 18 of the body portion 12 are not exposed to the external environment by the openings 7 in the first and second walls 4, 6. In examples, the hole 20 may be sized such that the interior surface 22, defined by the hole 20, is concentric with or otherwise forms a congruous continuation of the openings 7 in the first and second walls 4, 6.

For context, in examples, the minimum span of the hole 20 may be at least 50 mm, preferably at least 100 mm, but generally less than 400 mm in order to encircle the openings 7 and receive the conduit 9. As the size of the openings 7 in the first and second walls 4, 6 corresponds to the size of the conduit 9, extending therethrough, the size of the hole 20 may also correspond to the size of the conduit 9. For example, the span of the hole 20 may be configured to achieve a particular fit on the conduit 9, such as a press-fit, a compression fit, or a clearance fit for example.

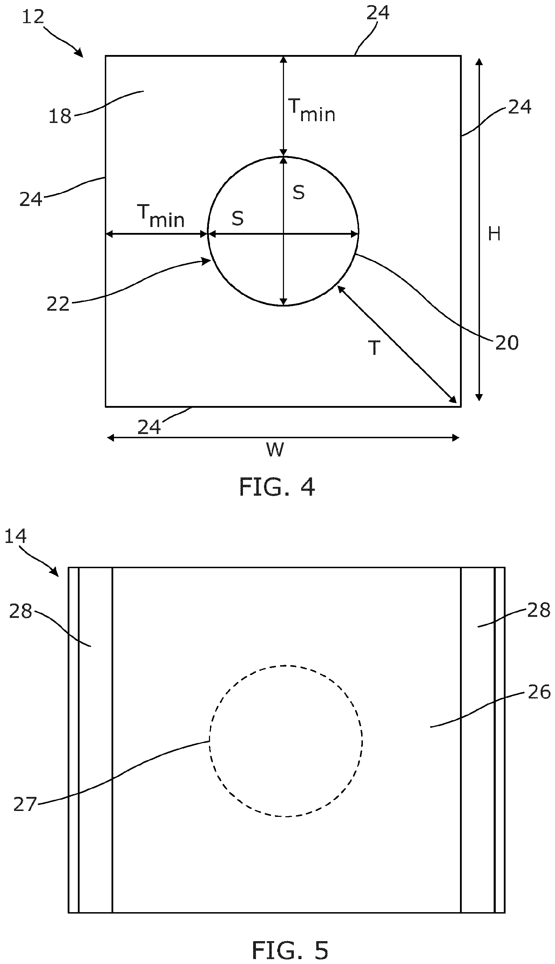

In order to provide adequate insulation around the conduit 9, through experimentation and testing in line with the prescribed principles for fire testing, the inventors have realised that the body portion 12 must include a thickness around the hole 20, measured orthogonally from the interior surface 22 to the exterior surfaces 24, that is sufficient to provide adequate fire integrity and/or insulation in the cavity 8, as shall be discussed in more detail with reference to Figure 4.

Figure 4 shows a schematic illustration of a front view of the body portion 12 in accordance with an embodiment of the present invention. As shown in Figure 4, the span or diameter of the hole 20 is marked as 'S' in this example and, the thickness, T, of the body portion 12 is shown to extend around the hole 20, orthogonally from the interior surface 22 to the exterior surface 24. The thickness, T, of the body portion 12 therefore varies circumferentially around the hole 20 in this example.

The inventors have found that a minimum thickness, Tₘᵢₙ, of the body portion 12 for providing adequate fire integrity and/or insulation in the cavity 8 varies with the size of the cavity 8 and, in turn, the depth, D, of the body portion 12 (which corresponds to the span of the cavity 8 in addition to any compressible margin). In this respect, it shall be appreciated that, for a fire inside the passage 11, the interior surface 22 of the body portion 12 would be exposed to heat/fire across the depth, D, of the body portion 12 (which may be compressed in situ) and the minimum thickness, Tₘᵢₙ, of the body portion 12 around the hole 20 therefore defines a minimum length that the heat/fire must travel through the body portion 12 in order to pass between the interior and exterior surfaces 22, 24.

Accordingly, for installation between a pair of masonry walls, the inventors have found that the body portion 12 is required to have a thickness, T, around the entire hole 20, that is greater than or equal to 0.65 times the depth, D, of the body portion 12. In other words, taking orthogonal measurements of the thickness, T, of the body portion 12 at each point around the hole 20, the body portion 12 must have a minimum thickness, Tₘᵢₙ, that is greater than or equal to 0.65 times the depth, D, of the body portion 12.

The inventors have found that this minimum thickness, Tₘᵢₙ, will provide at least 60 minutes of fire integrity in such applications, according to the fire testing principles given in EN1366-4. Additionally, it has been found that such a thickness provides at least 15 minutes of insulation when subjected to fire at one of the interior and exterior surfaces 22, 24. In this context 15 minutes of insulation means that ambient temperature is maintained at an opposing one of the interior and exterior surfaces 22, 24 to the fire for 15 minutes. The cavity barrier 1 therefore provides satisfactory heating insulation.

Accordingly, in embodiments of the invention, the minimum thickness, Tₘᵢₙ, of the body portion 12 corresponds to (i.e. varies in dependence on) the depth, D, of the body portion 12 and, in turn, the size of the cavity 8 in which the cavity barrier 1 is to be installed, which defines the depth, D, of the body portion 12 in situ.

When fitting the cavity barrier 1 between a timber wall and a masonry wall, the thickness, T, of the body portion 12, around the entire hole 20 should be greater than the thickness for installation between a pair of masonry walls. Accordingly, the inventors have found that the minimum thickness, Tₘᵢₙ, of the body portion 12 for such applications should be greater than or equal to 0.95 times the depth, D, of the body portion 12. This should ensure an insulation period of up to 30 minutes.

Finally, when fitting the cavity barrier 1 between a pair of timber walls, the thickness, T, of the body portion 12, around the entire hole 20 should be greater than the thickness for installation between a combination of a brickwork /masonry wall and a timber wall. Instead, the inventors found that the minimum thickness, Tₘᵢₙ, of the body portion 12 for such applications should be greater than or equal to 1.5 times the depth, D, of the body portion 12. This should ensure an insulation period of up to 30 minutes.

Larger thicknesses in each case provide redundant insulation, for example as it may be expected for fire barriers to fail elsewhere, and the body portion 12 may become impractical to use and transport. Accordingly, when installing the cavity barrier 1 between timber walls, in examples, the body portion 12 should have a minimum thickness, Tₘᵢₙ, measured at one or more points around the hole 20 (and ideally on opposite sides of the hole 20), that is less than or equal to the depth, D, of the body portion 12. Meanwhile for installation between a masonry wall and a timber wall, the body portion 12 should have a minimum thickness, Tₘᵢₙ, that is less than or equal to 2 times the depth, D, of the body portion 12, and, for installation between a pair of timber walls, the body portion 12 should have a minimum thickness, Tₘᵢₙ, measured at one or more points around the hole 20, that is less than or equal to 3 times the depth, D, of the body portion 12.

As the body portion 12 has a cuboidal shape in this example, the height and the width of the body portion 12 (defined by first and second orthogonal dimensions of the first and second surfaces 16, 18) is also determined based on the span, S, of the hole 20 and the minimum thickness, Tₘᵢₙ. In other words, the minimum height, H, and the minimum width, W, of the body portion 12 may each be determined as: H, W = S + (2 x Tₘᵢₙ).

In this respect, it shall be appreciated that the cuboidal shape of the body portion 12 may offer various advantages in terms of its ease of handling and machining, as well as its ease of integration with surrounding insulation in the cavity 8. However, the cuboidal shape is not intended to be limiting on the scope of the invention and, although the shape/size of the body portion 12 is dictated, in part, by the required minimum thickness, Tₘᵢₙ, around the hole 20, in other examples, the body portion 12 may have any suitable shape, such as a circular, rectangular, hexagonal or triangular shape. Moreover, the shape of the body portion 12 may or may not correspond to the shape of the hole 20. For example, the hole 20 is circular in this example and the body portion 12 is cuboidal. However, in other examples the hole 20 may take any other shape for receiving the conduit 9, and may be rectangular or triangular for example.

Hence, although the body portion 12 has a circular hole 20, in this example, and the body portion 12 has a rectangular shape, in other examples, the body portion 12 may have a circular shape corresponding to the circular hole 20 or a rectangular hole 20 corresponding to the rectangular body portion 12, for example.

Returning to Figure 2, the protective layer 14 shall now be considered in more detail. The protective layer 14 is shown to encapsulate the body portion 12 and is provided, in some examples, to prevent ingress of water and other contaminants.

The protective layer 14 may therefore comprise waterproof or water-resistant material, including plastics materials such as polythene. In this manner, the protective layer 14 enables the cavity barrier 1 to be stored and installed in all weather conditions. Furthermore, the design and water-resistant nature of the protective layer 14 also allows the cavity barrier 1 to arrive at a building site ready for installation, and serves to ease handling and installation of the cavity barrier 1, as shall be described in more detail with additional reference to Figures 4 and 5.

Figures 4 and 5 schematically illustrate front and top views of an exemplary protective layer 14 in accordance with an embodiment of the invention.

In this example, the protective layer 14 includes a sealable bag portion 26 and a pair of flange portions 28. The body portion 12 of the cavity barrier 1 is received in the sealable bag portion 26, which is subsequently sealed to encapsulate the body portion 12 and protect the body portion 12 from environmental damage. It shall be appreciated that the shape and size of the sealable bag portion 26, as well as an opening thereof, may therefore correspond to the shape and size of the body portion 12 so as to receive and, in turn, completely encapsulate, the body portion 12. A heat sealer may be used in order to seal the bag portion 26, for example.

The sealable bag portion 26 may be transparent or translucent such that the body portion 12, and the hole 20 extending therethrough, remains visible through the protective layer 14. This is helpful for alignment purposes during the subsequent installation of the cavity barrier 1, where it is necessary to align the hole 20 with the openings 7 in the first and second walls 4, 6 for the conduit 9. For such installation purposes, the sealable bag portion 26 may additionally or alternatively include a visual marking 27, on an exterior of the protective layer 14, corresponding to the location of the hole 20 of the body portion 12 and indicating an area to be removed (e.g. by cutting) in order to receive the conduit 9, in situ.

The protective layer 14 may include flange portions 28, as shown in Figures 4 and 5, that extend from opposing sides of the sealable bag portion 26, in this example, and aid with the installation of the cavity barrier 1. In particular, the flange portions 28 may be made of a flexible material, which may be the same material as the sealable bag portion 24, and extend away from the sealable bag portion 24. Accordingly, in situ, the flange portions 24 may be extended taught by an installer and secured to one of the walls 4, 6 of the building construction 2 (for example by fastening elements), thereby retaining the cavity barrier 1 in position on the wall.

In this manner, the protective layer 14 may serve the further advantage of removing a construction step associated with the prior art - in that there is no need for an individual to hold the barrier during installation or to apply adhesive to the underlying wall. The protective layer 14 may therefore also allow the cavity barrier 1 to be arranged in position during construction, for example when only one of the first and second walls 4, 6, has been constructed / installed and/or before the conduit 9 is fitted, as shall be discussed in more detail below.

However, the protective layer 14 described above is not intended to be limiting on the scope of the invention and, in other examples, the body portion 12 may otherwise be encapsulated by any suitable protective layer of water-resistant material, or the body portion 12 may be installed in the cavity 8 without any such protective layer.

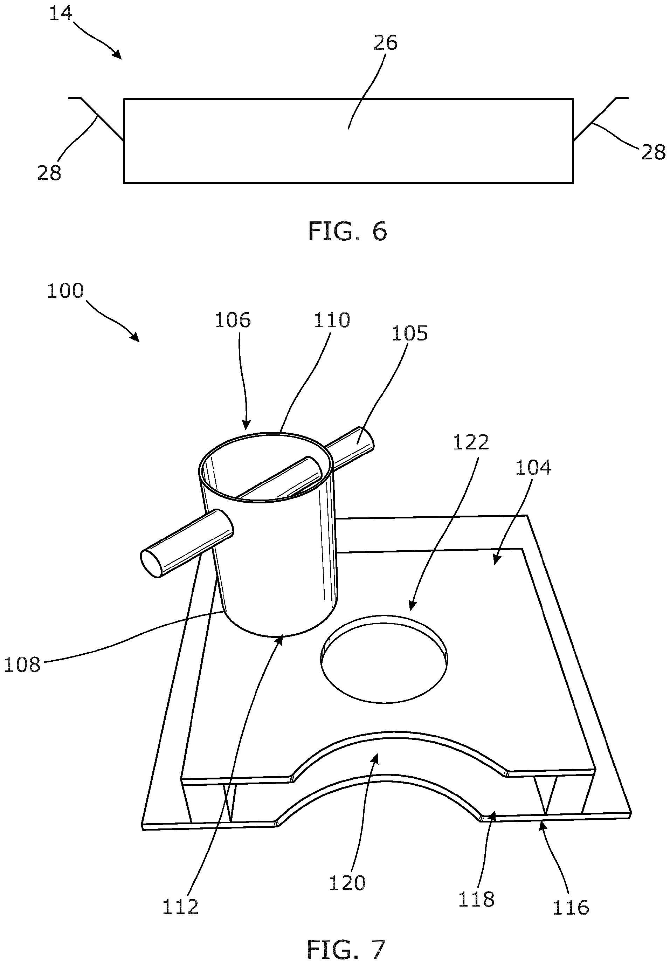

A method of manufacturing the cavity barrier 1 shown in Figure 2, shall now be described with additional reference to Figures 7 to 11.

In relation to the manufacture, it shall be appreciated that mineral wool, such as rock-fibre mineral wool and glass-fibre mineral wool, typically used as the compressible, fire-rated, material for cavity barriers is extremely abrasive. Accordingly, specific tool solutions are typically required for their machining. The challenge in sizing, profiling or even drilling is therefore always to maximize the lifetime and performance of the tools used and thus to make the overall process as efficient as possible. However, drilling holes in mineral wool places the highest demands on the cutting quality of the tools used and, in order to receive and accommodate a building services conduit (such as the conduit 9), the hole formed in the mineral wool is substantial (e.g. having a span of between 50 mm to 150 mm, or even 200 mm).

Consequently, the cutting forces involved in forming the hole 20 cause significant wear and the drill bits used are expensive to replace. In part, this explains why existing approaches to providing insulation around building services conduits have relied on bending, or otherwise joining, sections of mineral wool.

Accordingly, in order to produce the cavity barrier 1, the inventors have devised a method of manufacturing the cavity barrier 1 that involves punching the hole 20 for the conduit 9 using a punching apparatus, as opposed to drilling.

Figure 7 shows a schematic view of an exemplary punching apparatus 100 for use in the punching process. As shown in Figure 7, the punching apparatus 100 comprises a punch tool 102 and a locator jig or die 104 for receiving a block of material, such as mineral wool, for use as the body portion 12 of the cavity barrier 1. For example, a sheet or blank of suitable material may be machined or trimmed into the required shape of the body portion 12 and inserted into the die 104 for forming the through hole 20 in an appropriate position.

In this example, the punch tool 102 is hand-operated and therefore includes a handle 105 attached to a punch member 106. This hand operated example therefore provides various efficiencies and advantages in relation to its flexibility and ease of use. In other examples, the punch member 106 may be coupled to suitable machinery though that includes an actuation system for reciprocal insertion and removal of the punch member 106 from respective blocks of material.

The punch member 106 is tubular and shown to extend from a first end 108 to a second end 110. The handle 104 is arranged at the second end 110 and the first end 108 defines a cutting edge 110 for insertion into the block of body portion material. The first end 108 is therefore shaped to produce a through-hole 20 of a predetermined shape and size. Of course, the shape and size of the through-hole 20 corresponds to the shape and size of a respective conduit 9 and, in turn, the openings for the conduit 9 formed in a respective building construction 8. It shall therefore be appreciated that one of a plurality of punch tools 102 may therefore be used for forming the through hole 20, where each punching tool 102 corresponds to a respective conduit and/or building construction specification.

In this example, the first end 108 of the punch member 106 is circular and has a diameter corresponding to the desired span, S1, of the through-hole 20, as discussed previously. The cutting edge 110 may, for example, feature a plurality of serrated teeth for cutting into the material. However, this is not intended to be limiting on the scope of the punch tool 102 and, in other examples, the cutting edge 110 may be suitably tapered or otherwise define a sharpened edge for cutting through the block of material.

In order to provide abrasion resistance and durability for repeated use, the punch member 106 and/or the punch tool 102 may be made from metal or a ceramic material, for example steel or a titanium alloy may be suitable. Heat treating processes may also be used to further strengthen the punch tool 102.

Accordingly, upon insertion of the punch tool 102, the cutting edge 110 cuts through the body portion material and a removed section of the material is retained inside a hollow interior of the punch member 106 as the punch tool 102 is withdrawn.

Turning to the locator jig or die 104, the die 104 is configured to receive and locate the block of body portion material for cutting by the punch tool 102. The die 104 therefore includes a hollow structure 116 with a first opening 118 that defines interior surfaces 120 of the hollow structure 116 for receiving and locating the block of body portion material inside the hollow structure 116. The hollow structure generally corresponds to the shape of the prescribed body portion 12, and therefore has a generally cuboidal shape in this example, having a depth, width and height corresponding to the respective conduit and/or building construction specification. The die 104 also includes a second opening 122 for receiving the punch tool 102. In this respect, it shall be appreciated that the block of body portion material is trimmed or machined, prior to insertion into the hollow structure 116, such that the block substantially fills the hollow structure 116. The second opening 122 is therefore arranged to guide the punch tool 102 to an appropriate location for forming the through hole 20 and producing a body portion 12 that adheres to the minimum thickness, Tₘᵢₙ, requirements discussed previously.

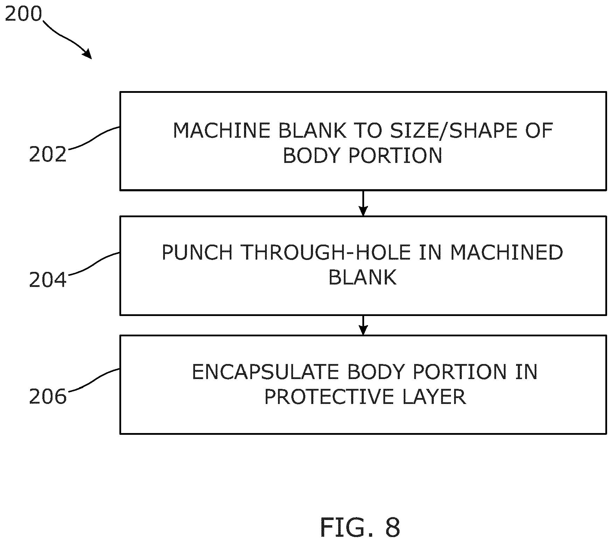

A complete method of manufacturing the cavity barrier 1, in accordance with an embodiment of the present invention, shall now be described with additional reference to Figures 8 to 12

In particular, Figure 8 shows a method 200, in accordance with an embodiment of the present invention, of manufacturing the cavity barrier 1.

In step 202, a sheet or blank of the body portion material may be cut, machined or otherwise trimmed to the shape and size of the body portion 12 prescribed for a respective cavity and conduit. Accordingly, to form the cavity barrier shown in Figure 1, the body portion material may be cut into a cuboidal shape having the height, width and depth determined for the cavity 8 and conduit 9.

By way of example, the first and second walls 4, 6 of the building construction may take the form of a masonry wall and a timber wall. The cavity 8 between the walls 4, 6 may have a span of 100 mm and, the conduit 9 may have a span or external diameter of 100 mm.

In this example, the body portion 12 may be formed of a rock-fibre mineral wool having a thermal conductivity of 0.037 W/mK or less, and a density of at least 33 kg/m³. As the cavity barrier 1 is installed between a masonry wall and a timber wall in this example, at least 15 mm of compression is required. Hence, the depth, D, of the body portion 12 prescribed for the cavity 8 may be 115 mm (cavity span + minimum compression).

Furthermore, the minimum thickness, Tₘᵢₙ, of the body portion 12 should be greater than or equal to depth, D, of the body portion 12 . Hence, the thickness, T, of the body portion 12 around the hole 20 should be greater than or equal to 115 mm. Moreover, to avoid redundant insulation, the minimum thickness, Tₘᵢₙ, should generally not exceed 2 times the depth, D and therefore, at its minimum, the thickness, T, should be less than or equal to 230 mm.

Accordingly, if the prescribed span, S, of the through-hole 20 is 100 mm for matching the openings 7 in the first and second walls 4, 6 and receiving the conduit 9 with a flush fit, the height, H, and width, W, of the body portion 12 may each be determined according to the equation: H, W= S1 + (2 x Tₘᵢₙ), where Tₘᵢₙ may range between 115 mm and 230 mm.

In step 202, the block of rock-fibre mineral wool may therefore be machined so as to have a height, H, of 330 mm, a width, W, of 330 mm, and a depth, D, of 115 mm. The shaping in this respect may be achieved by one or more machining processes known to the skilled person in the art, which are not described in detail here to avoid obscuring the invention.

In step 204, the through hole 20 for the conduit 9 is formed in the block of material by a punching process or, in a (less advantageous) example, the through hole 20 could instead be formed by a drilling process.

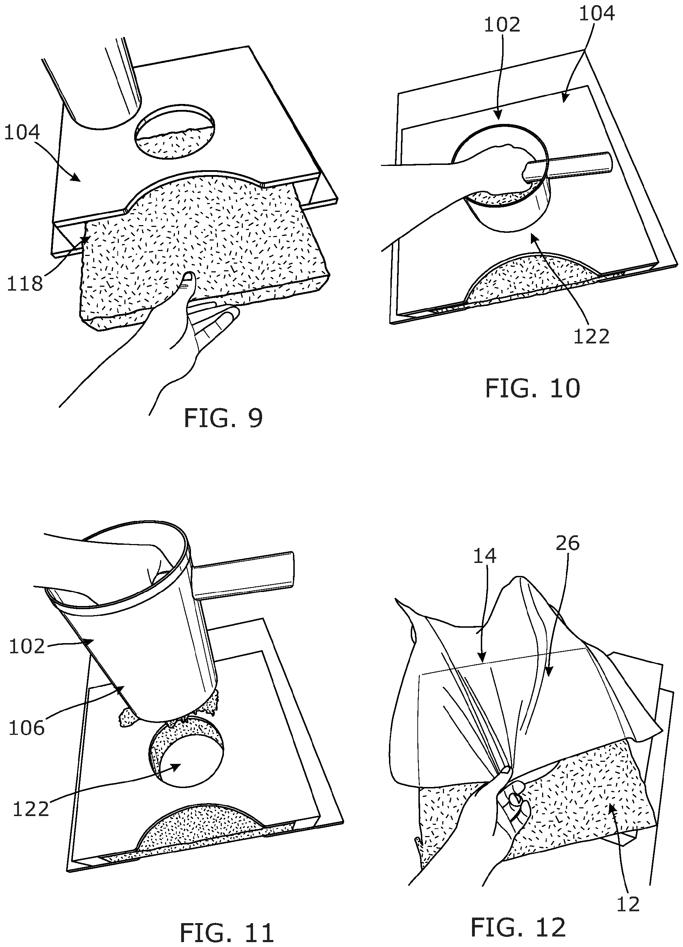

To provide further detail regarding the punching process, in step 204, the machined block of body portion material may be inserted into a respective die 104, which may be secured to an underlying surface (such as a table bed) for example. The block may be inserted into the first opening 118, substantially as shown in Figure 9, to substantially fill the interior of the hollow structure 116 and respective sides of the block may therefore be flush against the interior surfaces 120 of the hollow structure 116.

The punch tool 102 is inserted through the second opening 122 of the die 104 and penetrates into the block of body portion material housed therein. As shown in Figure 10, during the insertion of the punch tool 102, the die 104 holds the block of material in position and inhibits expansion of the block. The cutting edge 110 of the punch tool 102 therefore cuts through the block of material and, upon removal, a disk-shaped section of the body portion material may be retained inside the hollow interior of the punch member 106, as shown in Figure 11. In this manner, the punch tool 102 forms a clean-cut hole in the block of material, having a span of 100 mm, which forms the through-hole 20 of the body portion 12.

The die 104 ensures that the hole 20 is centred with respect to the body portion 12 in this example, and therefore a minimum thickness, Tₘᵢₙ, of at least 115 mm (equal to the depth, D) is provided around the hole 20, to provide adequate fire-integrity and insulation properties.

The formed body portion 12 can therefore be removed from the die 104 and installed directly in the cavity 8 of the building construction 2.

In examples, it may be preferred to encapsulate the body portion 12 in the protective layer 14 to further add water-resistance and protection from other contaminants, allowing for long term storage for example.

Accordingly, in optional step 206, the body portion 12 is encapsulated in the protective layer 14. For example, the body portion 12 may be inserted into the sealable bag portion 26 of a respective protective layer 14, as shown in Figure 11, and the sealable bag portion 26 may be sealed, for example by a heat sealer that bonds opposing surfaces of the sealable bag 26 together, retaining the body portion 12 therein.

The cavity barrier 1 is then fully formed, substantially as shown in Figure 2, ready for installation in the cavity 8.

The steps of the method 200 are only provided as a non-limiting example of the disclosure and many modifications may be made to the above-described examples without departing from the scope of the appended claims. For example, it shall be appreciated that one or more steps may be added, replaced or removed within the scope of the appended claims. By way of example, the block of material may be received in the desired shape/size such that there is no need to machine the block, in step 202, prior to insertion into the die 104, and/or the protective layer 14 may be omitted.

Once formed, the cavity barrier 1 may be installed in the building constructions according to one or more methods, as shall now be described in more detail.

In particular, returning to Figure 1, according to a first example method of installation, at least of the first and second walls 4, 6 may be in an assembled, constructed or prefabricated state and installed in situ, for example in a building site. The cavity barrier 1 may therefore be attached to that wall 4, 6 before the other wall is assembled and/or installed. In particular, the cavity barrier 1 may be attached to the installed wall 4, 6 by pulling the flange portions 28 of the protective layer 14 taught against said wall 4, 6 and securing the taught flange portions 28 using one or more fixing or fastening members. In this manner, one of the first and second surfaces 16, 18 of the body portion 12 is arranged in abutment against the underlying wall 4, 6 and the cavity barrier 1 may be arranged such that the hole 20 is aligned with, and encircles, the opening through the underlying wall for the conduit 9, or a designated space for such an opening (if not yet formed). Such alignment may be achieved, for example using the visual marking 27. Thereafter, the other wall 4, 6 may be assembled / moved into position and installed to complete the cavity wall (e.g. being fixed in position and tied to the other wall 4, 6), thereby compressing the cavity barrier 1 in the cavity 8 defined between the first and second walls 4, 6.

In doing so, the compressed cavity barrier 1 creates an air-tight seal that closes the cavity 8 around the respective openings 7 of the first and second walls 4, 6 for the conduit 9. At this stage, if not removed previously, the sealed bag portion 26 may be cut so as to expose the hole 20 of the body portion 12, and the conduit 9 may be inserted therethrough. Accordingly, as shown in Figure 1, the conduit 9 extends through the first and second walls 4, 6, of the building construction 2 and the cavity barrier 1 encircles the conduit 9, in the cavity 8.

In another example method of installation, the first and second walls 4, 6 may have been previously assembled and installed, in situ, defining the cavity 8 therebetween before fitting the cavity barrier 1. In this situation, the cavity barrier 1 may instead be installed by press-fit insertion into the cavity 8, so that the body portion 12 is held in compression between the first and second walls 4, 6 of the building construction 2. This enables the cavity barrier 1 to remain in place, encircling the respective openings 7, for the conduit 9, without additional fixings. Again, if not removed previously, the sealed bag portion 26 may then be cut, via one of the openings 7 in the first and second walls 4, 6 so as to expose the hole 20 of the body portion 12 and the conduit 9 may be inserted therethrough. In this manner, the cavity barrier 1 may be retrofit to existing building constructions 8.

Advantageously, once fitted, the cavity barrier 1 insulates the conduit 9, inhibiting heat transfer and/or the spread of fire between the cavity 8 and the internal passage 11 of the conduit 9. In this respect, the minimum thickness, Tₘᵢₙ, of the body portion 12 ensures that the cavity barrier 1 will provide at least 60 minutes of fire integrity, according to the fire testing principles given in EN1366-4 and, at least 15 minutes of insulation, during which an ambient temperature is maintained at the exterior surfaces 22 of the body portion 12.

Advantageously, as the body portion 12 is a unitary piece of material, the thickness, T, around the hole 20 is uncompromised by insertion into the cavity 8 and there are no joints or gaps in the body portion 12 that would otherwise compromise the fire protection provided by the cavity barrier 1.

It is envisaged that the cavity barrier 1 will therefore provide for improved insulation and fire protection around conduits 9 that extend through cavity walls. Advantageously, the cavity barrier 1 is also easy to handle and install, leading to reduced building construction costs.

It will be appreciated by a person skilled in the art that the invention could be modified to take many alternative forms to that described herein, without departing from the scope of the appended claims.

## Claims

1. A cavity barrier (1) for installation in a cavity (8), between first and second opposed walls (4,6) of a building construction (2), so as to surround an opening (7) that extends through the first and second walls (4, 6) for a conduit (9) of the building construction (2),
wherein the barrier (1) includes a unitary body portion (12) comprising:
a first surface (16) for location against the first wall (4) and an opposing second surface (18) for location against the second wall (6),
a hole (20) extending through a depth (D) of the body portion (12), from the first surface (16) to the second surface (18), for receiving the conduit (9),
an interior surface (22) defined between the first and second opposed surfaces (16, 18) by the through-hole (20);
an opposing exterior surface (24) extending between the first and second opposed surfaces (16, 18); and
a thickness (T) extending around the through-hole (20), from the interior surface (22) to the exterior surface (24);
wherein a minimum thickness (T) of the body portion (12) is greater than or equal to 0.65 times the depth (D) of the body portion (12).

2. A cavity barrier (1) according to claim 1, wherein at least a portion of the body portion (12) is compressible so as to form a substantially air-tight seal around the opening (7) and between the first and second opposed walls (4, 6), and, optionally, wherein the body portion (12) is resilient.

3. A cavity barrier (1) according to claim 1 or claim 2, wherein the body portion (12) is compressible by at least 5 mm between the first and second walls (4, 6), optionally by at least 15 mm and, optionally, by at least 25 mm.

4. A cavity barrier (1) according to any preceding claim, wherein the depth (D) of the body portion (12) is less than or equal to 300 mm and, optionally, less than or equal to 150 mm.

5. A cavity barrier (1) according to any preceding claim, wherein the minimum thickness (T) of the body portion (12) is greater than or equal to the depth (D) of the body portion (12), optionally, greater than or equal to 1.5 times the depth (D) of the body portion (12).

6. A cavity barrier (1) according to any preceding claim, wherein the minimum thickness (T) of the body portion (12) is less than or equal to 3 times the depth (D) of the body portion (12) and, optionally, less than or equal to 2 times the depth of the body portion (12).

7. A cavity barrier (1) according to any preceding claim, wherein the body portion (12) comprises fire-rated material, optionally, wherein the body portion (12) comprises a mineral wool, such as a rock fibre mineral wool, optionally, wherein the mineral wool has a density of at least 15 kg/m³ and, optionally, has a density of approximately 33 kg/m³.

8. A cavity barrier (1) according to any preceding claim, wherein the body portion (12) has a thermal conductivity of less than or equal to 0.04 W/mK, optionally, less than or equal to 0.037 W/mK, less than or equal to 0.035 W/mK, or less than or equal to 0.03 W/mK.

9. A cavity barrier (1) according to any preceding claim, wherein the body portion (12) is encapsulated in a protective layer (14) that is water-resistant or waterproof, the protective layer (14) comprising:
a sealable bag portion (28) for receiving the body portion (12); and
one or more flange portions (28) extending from the sealable bag portion (26) for attachment to one of the first and second walls (4, 6) to support the cavity barrier (1) in position on that wall.

10. A cavity barrier (1) according to claim 9, wherein the protective layer (14) is transparent or translucent.

11. A building construction (2) comprising:
a first wall (4) and an opposing second wall (6) spaced apart to define a cavity (8) between the first and second walls (4, 6);
an opening (7) that extends through the first and second walls (4, 6) for a conduit (9) of the building construction (2); and
a cavity barrier (1) according to any preceding claim installed in the cavity (8).

12. A building construction (2) according to claim 11, wherein the first wall (4) is a timber wall and the second wall (6) is a masonry wall; and wherein the minimum thickness (T) of the body portion (12) is greater than or equal to 0.95 times the depth (D) of the body portion (12).

13. A building construction (2) according to claim 11, wherein each of the first and second walls (4, 6) is a timber wall, and wherein the minimum thickness (T) of the body portion (12) is greater than or equal to 1.5 times the depth (D) of the body portion (12), optionally, greater than or equal to 2 times the depth (D) of the body portion (12).

14. A building comprising:
a building construction (2) according to any of claims 11 to 13; and
a conduit (9) extending through the opening (7) of the first and second walls (4, 6); wherein the cavity barrier (1) is installed in the cavity (8) between the first and second walls (4, 6) so as to surround the conduit (9).

15. A method of manufacturing a cavity barrier (1) according to any of claims 1 to 10, the method comprising:
punching the through-hole (20) using a punch apparatus (100).
